# FASCICULE DE BREVET EUROPEEN

(11) **EP 2 262 736 B1**
(45) Date de publication et mention de la délivrance du brevet: **09.11.2016**
(21) Numéro de dépôt: 09720750.0
(22) Date de dépôt: 23.02.2009
(51) Int. Cl.: C01G 23/047, C01G 23/08, C01G 25/00, C01G 25/02, B01D 53/56, B01J 23/10, B01J 37/08, B01J 37/03, B01J 21/06, B01D 53/86, B01D 53/94, B01J 35/00, B01J 37/00, B01J 37/02, B82Y 30/00, B01J 35/10

(54) **COMPOSITION A BASE D'UN OXYDE DE ZIRCONIUM, D'UN OXYDE DE TITANE OU D'UN OXYDE MIXTE DE ZIRCONIUM ET DE TITANE SUR UN SUPPORT EN ALUMINE OU EN OXYHYDROXYDE D'ALUMINIUM, PROCEDES DE PREPARATION ET UTILISATION COMME CATALYSEUR**
ZUSAMMENSETZUNG AUF DER BASIS EINES ZIRCONIUMOXIDS, TITANOXIDS ODER EINES ZIRCONIUM-TITAN-MISCHOXIDS AUF EINEM ALUMINIUM- ODER ALUMINIUM-OXYHYDROXID-SUBSTRAT, HERSTELLUNGSVERFAHREN UND VERWENDUNG ALS KATALYSATOR
COMPOSITION BASED ON A ZIRCONIUM OXIDE, A TITANIUM OXIDE OR A MIXED ZIRCONIUM TITANIUM OXIDE ON AN ALUMINA OR ALUMINIUM OXYHYDROXIDE SUPPORT, METHODS OF PREPARATION AND USE AS CATALYST

(30) Priorité: 05.03.2008 FR 0801203
(43) Date de publication de la demande: 22.12.2010
(73) Titulaire: Rhodia Opérations, 93306 Aubervilliers (FR)
(72) Inventeur: VERDIER, Stephan, 69008 Lyon (FR); CRINIERE, Guillaume, 1050 Ixelles (BE); IFRAH, Simon, 17140 Lagord (FR); JORGE COELHO MARQUES, Rui, 75017 Paris (FR)
(74) Mandataire: Senninger, Thierry
(86) Numéro de dépôt international: PCT/EP2009/052129
(87) Numéro de publication internationale: WO 2009/112356

(56) Documents cités:
- WO-A-2008/025753
- FR-A- 2 697 831
- VERA P SHMACHKOVA ET AL: "Formation of supported size-controlled nanoparticles of sulfated zirconia" REACTION KINETICS AND CATALYSIS LETTERS, KLUWER ACADEMIC PUBLISHERS, DO, vol. 91, no. 1, 1 juin 2007 (2007-06-01), pages 177-185, XP019507944 ISSN: 1588-2837
- ZHANG X ET AL: "Preparation of anatase TiO2 supported on alumina by different metal organic chemical vapor deposition methods" 30 mars 2005 (2005-03-30), APPLIED CATALYSIS A: GENERAL, ELSEVIER SCIENCE, AMSTERDAM, NL, PAGE(S) 285 - 293 , XP004768637 ISSN: 0926-860X [Experimental], [Results and discussions 3.1 and 3.3], [Table 1]

## Description

La présente invention concerne une composition à base d'un oxyde de zirconium, d'un oxyde de titane ou d'un oxyde mixte de zirconium et de titane sur un support à base d'alumine ou d'oxyhydroxyde d'aluminium, ses procédés de préparation et son utilisation comme catalyseur.

Les catalyseurs sont souvent constitués d'une phase active qui est celle qui a les propriétés catalytiques recherchées et d'un support sur lequel est déposée cette phase active.

L'article de V.P. Shmachkova « Formation of supported size-controlled nanoparticles of sulfated zirconia » Reac. Kinet. Catal. Lett. Vol. 91, N°. 1, pp. 177-185 (2007) décrit notamment une composition à base d'oxyde de zirconium déposé sur un support en alumine dans laquelle les particules d'oxyde de zirconium présentent une taille comprise entre 5 et 10 nm après calcination à 600°C.

FR 2 697 831 A décrit une alumine dont la surface spécifique à haute température est stabilisée par du baryum. Cette alumine peut être utilisée comme support de catalyseur.

Il est important pour l'efficacité du catalyseur que la phase active soit dispersée le plus finement possible sur le support, c'est-à-dire que cette phase active se présente sous la forme de particules fines, non agrégées sur le support. En outre, comme les catalyseurs sont souvent exposés à des températures élevées, il convient aussi que l'état finement divisé de la phase active soit maintenu même à ces températures. En d'autres termes, il ne doit pas y avoir de frittage des particules.

L'objet de l'invention est la mise au point de catalyseurs répondant à ces conditions.

Dans ce but, la composition de l'invention comprend au moins un oxyde supporté choisi parmi l'oxyde de zirconium, l'oxyde de titane ou un oxyde mixte de zirconium et de titane sur un support à base d'alumine ou d'oxyhydroxyde d'aluminium, caractérisée en ce que, après calcination 4 heures à 900°C, l'oxyde supporté est sous forme de particules, déposées sur ledit support, dont la taille est
d'au plus 10 nm lorsque l'oxyde supporté est l'oxyde de zirconium;
d'au plus 15 nm lorsque l'oxyde supporté est l'oxyde de titane ou un oxyde mixte de zirconium et de titane.

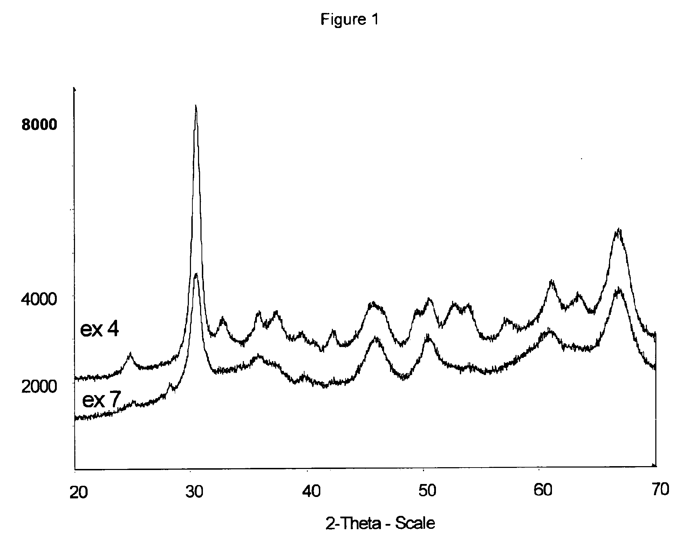

D'autres caractéristiques, détails et avantages de l'invention apparaîtront encore plus complètement à la lecture de la description qui va suivre et du dessin annexé dans lequel :
- la figure est un diffractogramme RX d'un produit selon l'invention et d'un produit de l'art antérieur.

Par terre rare on entend les éléments du groupe constitué par l'yttrium et les éléments de la classification périodique de numéro atomique compris inclusivement entre 57 et 71.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations pour une température et une durée données correspondent, sauf indication contraire, à des calcinations sous air à un palier de température sur la durée indiquée.

On précise aussi pour la suite de la description que, sauf indication contraire, dans toutes les gammes ou limites de valeurs qui sont données, les valeurs aux bornes sont incluses, les gammes ou limites de valeurs ainsi définies couvrant donc toute valeur au moins égale et supérieure à la borne inférieure et/ou au plus égale ou inférieure à la borne supérieure.

La composition de l'invention comprend un oxyde supporté sous forme de particules de dimensions nanométriques, ces particules étant déposées sur un support.

Cet oxyde supporté peut être tout d'abord un oxyde de zirconium seul, oxyde simple, sous forme ZrO₂.

L'oxyde supporté peut être aussi un oxyde de zirconium dopé, c'est-à-dire qu'il peut être constitué d'un oxyde de zirconium et d'au moins un oxyde d'un autre élément M choisi parmi le praséodyme, le lanthane, le néodyme et l'yttrium. Dans ce cas, l'oxyde de zirconium ZrO₂ est le constituant essentiel ou majoritaire, l'élément ou les éléments M constituent alors le reste de l'oxyde supporté.

La teneur en élément M est d'au plus 50% en masse, l'oxyde de zirconium constituant au moins 50% en masse de l'oxyde supporté. Cette teneur est exprimée en masse d'oxyde de l'élément M ou de l'ensemble des éléments M, par rapport à la masse de l'oxyde supporté dans son ensemble (oxyde de zirconium et oxyde(s) d'élément(s) M). Cette teneur en élément M peut varier dans une large gamme et elle peut être notamment comprise entre 5% et 40% et plus particulièrement entre 10% et 40%. Cette teneur peut être tout particulièrement comprise entre 10% et 30%.

L'oxyde supporté peut être aussi l'oxyde de titane TiO₂.

L'oxyde supporté peut être encore un oxyde mixte de zirconium et de titane. Par oxyde mixte on entend ici une solution solide des oxydes de titane et de zirconium sous la forme d'une phase cristallographique pure de structure ZrTiO₄. Dans ce cas l'analyse du produit par la technique de diffraction des rayons X (DRX) ne permet pas de mettre en évidence une autre structure que la structure ZrTiO₄. Cette structure correspond à la référence 34-415 JCPDS. Cette solution solide est généralement présente pour des proportions qui peuvent être comprises entre 30% et 40% en masse d'oxyde de titane par rapport à la masse totale de l'oxyde mixte.

On notera ici que la composition peut comprendre plusieurs types d'oxydes sur le support c'est-à-dire à la fois des particules d'oxyde de zirconium, des particules d'oxyde de titane et des particules d'oxyde mixte, chacun de ces oxydes étant cependant sous la forme de particules présentant les tailles données ci-dessus.

L'oxyde supporté est sous forme cristallisée.

On doit noter ici que les particules de l'oxyde supporté peuvent être soit individualisées soit éventuellement sous forme d'agrégats.

Les valeurs de taille données dans la présente description sont des tailles moyennes déterminées par la technique DRX. La valeur mesurée en DRX correspond à la taille du domaine cohérent calculé à partir de la largeur des trois raies de diffraction les plus intenses dans le groupe d'espace x, y, z et en utilisant le modèle de Debye-Scherrer.

Les tailles de particules de l'oxyde supporté ont été données plus haut en fonction de l'oxyde supporté et des conditions de calcination de la composition. Comme indiqué plus haut, les particules sont déposées sur un support. On entend par là que les particules d'oxyde supporté sont majoritairement présentes sur la surface de ce support étant entendu que les particules peuvent être présentes à l'intérieur des pores du support mais en restant à la surface de ces pores.

En outre, l'oxyde supporté est entièrement sous forme de particules supportés, au sens donné ci-dessus, c'est-à-dire que dans les compositions selon l'invention on ne trouve pas une partie de cet oxyde qui serait présente sous forme d'un simple mélange de cette partie de l'oxyde avec le reste de la composition qui comprendrait ainsi le support et l'autre partie de l'oxyde sous forme supportée.

De préférence, la taille des particules de l'oxyde supporté est d'au plus 9 nm lorsque l'oxyde supporté est un oxyde de zirconium, éventuellement dopé, et elle est d'au plus 12 nm lorsque l'oxyde supporté est un oxyde de titane ou d'un oxyde mixte de zirconium et de titane, ceci après calcination 4 heures à 900°C.

Après calcination à 1000°C 4 heures, la taille des particules de l'oxyde supporté est d'au plus 20 nm, de préférence d'au plus 17 nm, lorsque l'oxyde supporté est un oxyde de zirconium, éventuellement dopé, et elle est d'au plus 30 nm lorsque l'oxyde supporté est un oxyde de titane ou un oxyde mixte de zirconium et de titane.

Les tailles minimales des particules ne sont pas critiques et elles peuvent être très faibles. A titre purement indicatif, la taille des particules peut être d'au moins 4 nm, plus particulièrement d'au moins 6 nm lorsque l'oxyde supporté est un oxyde de zirconium, éventuellement dopé, et d'au moins 8 nm, plus particulièrement d'au moins 10 nm lorsque l'oxyde supporté est un oxyde de titane ou un oxyde mixte de zirconium et de titane. Ces valeurs minimales sont données aussi ici pour des compositions calcinées 4 heures à 900°C.

La composition de l'invention a pour avantage, par rapport aux compositions connues du même type, de pouvoir contenir une quantité plus importante d'oxyde supporté sans que cela entraine un frittage des particules d'oxyde lorsque la composition est soumise à des températures élevées.

La teneur en oxyde supporté de la composition de l'invention est généralement d'au plus 50% en masse de l'ensemble de la composition. Elle peut être notamment d'au plus 30%.

La teneur minimale en oxyde supporté est celle à partir de laquelle l'homme du métier sait que l'on peut obtenir une activité catalytique suffisante et elle est fixée en fonction des performances recherchées de la composition. A titre d'exemple seulement, cette teneur minimale est généralement d'au moins 3%, plus particulièrement d'au moins 4% en masse. Elle peut être aussi d'au moins 10%, notamment d'au moins 15% et encore plus particulièrement d'au moins 20%.

La teneur en oxyde supporté peut notamment être comprise entre 10% et 50%, plus particulièrement entre 10% et 30%. Elle peut être aussi comprise entre 15% et 30% ou encore entre 20% et 30%.

Le support de la composition de l'invention peut être tout d'abord à base d'alumine. De préférence, ce support doit présenter une surface spécifique élevée et stable, c'est-à-dire qui reste à une valeur suffisante même après exposition à une température élevée.

On peut utiliser ici tout type d'alumine susceptible de présenter une surface spécifique suffisante pour une application en catalyse. On peut ainsi utiliser notamment une alumine présentant une surface spécifique d'au moins 150 m²/g, de préférence d'au moins 200 m²/g et encore plus préférentiellement d'au moins 300 m²/g.

On peut mentionner les alumines issues de la déshydratation rapide d'au moins un hydroxyde d'aluminium, tel que la bayérite, l'hydrargillite ou gibbsite, la nordstrandite, et/ou d'au moins un oxyhydroxyde d'aluminium tel que la boehmite, la pseudoboehmite et le diaspore.

Le support peut être aussi à base d'oxyhydroxyde d'aluminium du type précité et présentant aussi une surface spécifique adaptée, c'est-à-dire comme décrite plus haut au sujet de l'alumine.

Selon un mode de réalisation particulier de l'invention, on utilise une alumine ou un oxyhydroxyde d'aluminium stabilisé et/ou dopé. Comme élément stabilisant et/ou dopant on peut citer les terres rares, le baryum, le strontium et le silicium. Comme terre rare on peut mentionner tout particulièrement le cérium, le praséodyme, le néodyme, le lanthane ou le mélange lanthane-néodyme. Ces éléments peuvent être utilisés seuls ou en combinaison. Comme combinaisons avantageuses, on peut citer La-Ba, Ba-Pr, La-Pr-Ba et La-Pr.

On notera pour la suite de la description que les termes « stabilisé », dopé », stabilisant » ou « dopant » doivent être interprétés d'une manière non limitative un élément dopant pouvant ainsi être compris comme stabilisant et réciproquement.

La préparation de l'alumine ou de l'oxyhydroxyde d'aluminium stabilisé et/ou dopé se fait d'une manière connue en soi, notamment par imprégnation de l'alumine ou de l'oxyhydroxyde d'aluminium par des solutions de sels, comme les nitrates, des éléments stabilisants et/ou dopants précités ou encore par coséchage d'un précurseur d'alumine et de sels de ces éléments puis calcination.

On peut citer par ailleurs une autre préparation de l'alumine stabilisée dans laquelle la poudre d'alumine issue de la déshydratation rapide d'un hydroxyde ou d'un oxyhydroxyde d'aluminium est soumise à une opération de mûrissement en présence d'un agent stabilisant constitué par un composé du lanthane et, éventuellement, un composé du néodyme, ce composé pouvant être plus particulièrement un sel. Le mûrissement peut se faire par mise en suspension de l'alumine dans l'eau puis chauffage à une température comprise par exemple entre 70 et 110°C. Après le mûrissement, l'alumine est soumise à un traitement thermique.

Une autre préparation consiste en un type de traitement similaire mais avec le baryum ou le strontium.

La teneur en stabilisant et/ou dopant exprimée en poids d'oxyde de stabilisant et/ou dopant par rapport à l'alumine ou l'oxyhydroxyde d'aluminium stabilisé et/ou dopé est comprise généralement entre 1,5% et 35%, ou encore entre 1,5% et 25%, notamment entre 1,5% et 15%. Cette teneur peut être plus particulièrement comprise entre 2,5% et 20%, plus particulièrement entre 2,5 et 11 % ou encore entre 5% et 20%.

Selon un mode de réalisation particulier, le stabilisant est le baryum et/ou le strontium dans une teneur exprimée en poids d'oxyde de stabilisant par rapport à l'alumine ou l'oxyhydroxyde d'aluminium stabilisé d'au plus 10%.

Enfin, les compositions de l'invention peuvent présenter une surface spécifique BET élevée qui peut être, après calcination 4 heures à 900°C, d'au moins 80 m²/g, plus particulièrement d'au moins 120 m²/g et encore plus particulièrement d'au moins 150 m²/g. Après calcination 4 heures à 1000°C, ces compositions peuvent présenter une surface d'au moins 50 m²/g, plus particulièrement d'au moins 80 m²/g et encore plus particulièrement d'au moins 100 m²/g.

Les compositions de l'invention peuvent être préparées par différents procédés qui vont maintenant être décrits.

### A Premier procédé de préparation des compositions de l'invention

Ce premier procédé comprend les étapes suivantes :
- on met en présence une dispersion colloïdale d'un composé du zirconium et/ou du titane et, le cas échéant d'un composé de l'élément M, et un composé de l'aluminium;
- on sèche par atomisation le mélange ainsi formé;
- on calcine le produit séché ainsi obtenu.

La première étape de ce procédé consiste donc à mettre en présence un composé de l'aluminium et la dispersion en formant un mélange à partir d'une dispersion colloïdale d'un composé du zirconium ou d'une dispersion colloïdale d'un composé du titane ou encore d'une dispersion comprenant à la fois un composé du zirconium et un composé du titane ceci en fonction de la nature de l'oxyde supporté dans la composition que l'on cherche à préparer. Dans le cas de la préparation d'une composition dans laquelle l'oxyde supporté est un mélange d'un oxyde de zirconium et d'au moins un oxyde d'un autre élément M, ce mélange comprend en outre une dispersion colloïdale d'un oxyde de cet élément. On peut utiliser aussi une dispersion colloïdale unique dans laquelle les colloïdes sont à base d'un oxyde mixte de zirconium et de l'élément M. La présente description s'applique bien entendu ici au cas où l'oxyde supporté comprend plusieurs éléments M et on comprend que l'on pourra utiliser alors dans ce même cas plusieurs dispersions des différents éléments M ou éventuellement une dispersion colloïdale unique comprenant tous les éléments M. Par souci de concision, on ne fera plus dans le reste de la description que référence à un dispersion d'un élément M mais la description devra être comprise comme s'appliquant au cas donné ci-dessus.

Par dispersion colloïdale on désigne tout système constitué de fines particules solides de dimensions colloïdales, c'est à dire des dimensions comprises entre environ 1 nm et environ 100 nm (dimension mesurée par la technique de diffusion quasi élastique de la lumière), à base d'un composé de zirconium, de titane et/ou de l'élément M, ce composé étant généralement un oxyde et/ou un oxyde hydraté, en suspension stable dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans une telle dispersion colloïdale le zirconium, le titane ou l'élément M peuvent se trouver soit totalement sous la forme de colloïdes, soit simultanément sous la forme d'ions et sous la forme de colloïdes.

On forme un mélange de la dispersion avec un composé de l'aluminium. Ce composé de l'aluminium peut être le support lui-même notamment sous forme d'une alumine ou d'un oxyhydroxyde d'aluminium, cette alumine ou cet oxyhydroxyde d'aluminium devant s'entendre ici comme étant du type décrit plus haut et comme pouvant être notamment stabilisé et/ou dopé comme décrit plus haut ou encore ce peut être un précurseur de l'alumine, c'est à dire un composé qui après calcination peut conduire à de l'alumine. Il peut s'agir de précurseurs séchés, c'est-à-dire présentant une perte au feu d'au plus 50%, plus particulièrement d'au plus 25%. Ce composé peut être ainsi choisi parmi les hydroxydes ou oxyhydroxydes d'aluminium. Ce peut être ainsi un hydroxyde d'aluminium tel que la bayerite, l'hydrargillite ou gibbsite, la nordstrandite ou un oxyhydroxyde d'aluminium tel que la boehmite, la pseudoboehmite et le diaspore. Le composé d'aluminium peut se présenter sous la forme d'une suspension, notamment d'une suspension aqueuse.

Le mélange se fait en phase aqueuse, l'eau généralement et par exemple l'eau distillée ou permutée.

La deuxième étape du procédé est une étape de séchage.

Ce séchage se fait par atomisation.

On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

La température de sortie d'atomisation peut être comprise par exemple entre 80°C et 150°C.

La dernière étape du procédé est une étape de calcination.

Cette calcination permet de développer la cristallinité du produit supporté et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500°C et 800°C, de préférence entre 600°C et 700°C. La durée de calcination est ajustée d'une manière connue, elle peut varier par exemple entre 30 minutes et 4 heures, cette durée étant généralement d'autant plus faible que la température est élevée.

### B Second procédé de préparation des compositions de l'invention

Les compositions de l'invention peuvent aussi être préparées par un second procédé qui va être décrit ci-dessous.

Ce procédé comprend les étapes suivantes :
- on forme un mélange liquide comprenant un sel de zirconium ou de titane et, le cas échéant, de l'élément M et un composé de l'aluminium;
- on chauffe le mélange ainsi formé à une température d'au moins 100°C;
- on récupère le précipité ainsi obtenu;
- on calcine ledit précipité.

Pour la première étape on part aussi d'un composé de l'aluminium et ce qui a été dit plus haut pour la première étape au sujet de ce composé s'applique de même ici. Toutefois, pour ce second procédé, le mélange se fait avec un sel de zirconium et/ou un sel de titane et un sel de l'élément M, dans le cas de compositions où l'oxyde supporté est à base d'un oxyde de zirconium et d'un oxyde d'un autre élément M. Ce mélange se fait en phase aqueuse, l'eau généralement. On notera que dans le cas de l'utilisation d'un composé de l'aluminium sous forme d'une suspension cette suspension de départ peut éventuellement être acidifiée.

Les sels peuvent être choisis parmi les nitrates, les sulfates, les acétates, les chlorures.

A titre d'exemples, on peut ainsi citer plus particulièrement le sulfate de zirconyle, le nitrate de zirconyle ou le chlorure de zirconyle. On peut aussi utiliser un oxychlorure ou un oxysulfate de titane.

L'étape suivante du procédé est l'étape de chauffage du mélange liquide ainsi formé.

La température à laquelle est chauffé le mélange liquide est d'au moins 100°C et encore plus particulièrement d'au moins 130°C. Elle peut être ainsi comprise entre 100°C et 150°C. L'opération de chauffage peut être conduite en introduisant le mélange liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le mélange liquide par exemple entre 30 minutes et 4 heures, ces valeurs étant données à titre tout à fait indicatif.

A l'issue de l'étape de chauffage, on récupère un précipité solide qui peut être séparé de son milieu par toute technique classique de séparation solide-liquide telle que par exemple filtration, décantation, essorage ou centrifugation.

Le produit tel que récupéré peut ensuite être soumis à des lavages, qui sont alors opérés à l'eau ou éventuellement avec une solution basique, par exemple une solution d'ammoniaque ou encore une solution acide, une solution d'acide nitrique par exemple.

Selon une variante particulière de l'invention, le procédé comprend un mûrissement.

Ce mûrissement s'effectue généralement sur une suspension obtenue après remise dans l'eau du précipité, notamment après le lavage. Le mûrissement se fait en chauffant de nouveau cette suspension. La température à laquelle est chauffée la suspension est d'au moins 40°C, plus particulièrement d'au moins 60°C et encore plus particulièrement d'au moins 100°C. Généralement cette température est d'au plus 200°C, plus particulièrement d'au plus 150°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

La dernière étape de calcination de ce second procédé peut être mise en oeuvre de la même manière que pour le premier procédé et donc ce qui a été décrit plus haut pour cette calcination s'applique de même ici.

Dans le cas de la préparation de compositions avec un support à base d'alumine ou d'oxyhydroxyde d'aluminium stabilisé et/ou dopé par un élément stabilisant et/ou dopant choisi parmi les terres rares, le baryum et le strontium, deux autres procédés (troisième et quatrième procédés) peuvent être mis en oeuvre qui vont maintenant être décrits.

### C Troisième procédé de préparation des compositions de l'invention

Ce troisième procédé comprend les étapes suivantes :
- (a₁) on forme un mélange liquide comprenant une dispersion colloïdale de l'oxyde supporté et, le cas échéant de l'oxyde de l'élément M, un composé de l'aluminium et un composé de l'élément stabilisant;
- (b₁) on met en présence le mélange précédent avec une base ce par quoi on obtient une suspension comprenant un précipité;
- (c₁) on sèche la suspension ainsi obtenue;
- (d₁) on calcine le produit séché ainsi obtenu.

Le mélange de l'étape (a₁) se fait en phase aqueuse, l'eau généralement.

Pour l'oxyde supporté, on utilise toute dispersion colloïdale du type décrit plus haut.

Le composé de l'élément stabilisant peut être notamment un sel, comme un nitrate, un acétate, un chlorure, un sulfate, sous forme d'une solution.

Le composé de l'aluminium est du même type que celui qui a été décrit plus haut dans le cadre du premier procédé.

La deuxième étape du procédé consiste à mettre en présence le mélange obtenu à l'étape (a₁) avec une base.

On peut utiliser comme base les produits du type hydroxyde, carbonate ou hydroxy-carbonate par exemple. On peut citer les hydroxydes d'alcalins ou d'alcalino-terreux, les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

La mise en présence peut se faire dans un ordre quelconque en milieu liquide.

Plus particulièrement, la mise en présence avec la base se fait jusqu'à l'obtention d'un pH du milieu réactionnel d'au moins 7.

La mise en contact avec la base conduit à la formation d'un précipité en suspension dans le milieu liquide réactionnel.

Selon une variante de ce procédé, celui-ci peut comporter une étape additionnelle éventuelle qui consiste à soumettre la suspension issue de l'étape précédente (b₁) à un mûrissement. Le mûrissement se fait en chauffant la suspension à une température d'au moins 60°C, plus particulièrement d'au moins 80°C. Généralement cette température est d'au plus 200°C, plus particulièrement d'au plus 150°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée.

A l'issue de l'étape (b₁) ou, éventuellement de l'étape de mûrissement lorsque celle-ci est mise en oeuvre, on effectue les étapes (c₁) et (d₁) mentionnées plus haut. Ces deux étapes sont semblables aux deux dernières étapes du premier procédé de l'invention et tout ce qui a été décrit plus haut s'applique de même à ces étapes (c₁) et (d₁). On notera toutefois que le séchage peut se faire par un autre moyen que l'atomisation, par exemple dans un four.

Une variante peut être utilisée dans le cadre de ce troisième procédé. Cette variante consiste, à l'issue de l'étape (b₁) ou, éventuellement de l'étape de mûrissement lorsque celle-ci est mise en oeuvre, à séparer le précipité de la suspension, à le laver et à le remettre en dispersion dans l'eau pour former une seconde suspension. C'est cette dernière suspension qui est ensuite séchée dans l'étape (c₁).

### D Quatrième procédé de préparation des compositions de l'invention

Ce quatrième procédé de préparation comprend les étapes suivantes :
- (a₂) on forme un mélange liquide comprenant une dispersion colloïdale de l'oxyde supporté et, le cas échéant de l'oxyde de l'élément M, et un composé de l'aluminium;
- (b₂) on met en présence le mélange précédent avec une base ce par quoi on obtient une suspension comprenant un précipité;
- (c₂) on ajoute à la suspension ainsi obtenue un composé de l'élément stabilisant;
- (d₂) on sèche la suspension issue de l'étape précédente;
- (e₂) on calcine le produit séché ainsi obtenu.

Ce procédé se distingue du troisième procédé par le fait que le composé de l'élément stabilisant est apporté dans une étape différente, à l'issue de l'étape (b₂) ou, éventuellement d'une étape de mûrissement qui, là aussi, peut être mise en oeuvre après cette dernière étape. En conséquence, tout ce qui a été décrit pour le troisième procédé s'applique de même ici. Le composé de l'élément stabilisant est notamment du même type que décrit précédemment. Par ailleurs, on peut mettre aussi en oeuvre la variante décrite plus haut pour le troisième procédé et dans laquelle, à l'issue de l'étape (b₂) ou, éventuellement de l'étape de mûrissement lorsque celle-ci est mise en oeuvre, on sépare le précipité de la suspension, on le lave et on le remet en dispersion dans l'eau pour former une seconde suspension. Dans ce cas, le composé de l'élément stabilisant est ajouté à cette seconde suspension.

Le quatrième procédé décrit ici s'applique tout particulièrement au cas où l'élément stabilisant est le baryum ou le strontium.

### E Cinquième procédé de préparation des compositions de l'invention

Ce cinquième procédé comprend les étapes suivantes :
- on forme un mélange liquide contenant un composé de l'aluminium et au moins un sel de zirconium ou de titane et, le cas échéant, de l'élément M;
- on met en présence une base et le mélange précédent de manière à former un précipité;
- on récupère le précipité ainsi obtenu;
- on calcine ledit précipité.

La première étape de ce cinquième procédé est semblable à la première du second procédé et ce qui a été décrit plus haut à ce sujet s'applique donc de même ici.

La seconde étape consiste à obtenir un précipité par réaction du mélange formé à l'étape précédente avec une base. Ce qui a été décrit plus haut pour l'étape (b₁) du troisième procédé s'applique de même ici.

Plus particulièrement, la mise en présence avec la base se fait jusqu'à l'obtention d'un pH du milieu réactionnel d'au moins 7.

Il est aussi possible, à l'issue de cette seconde étape de soumettre la suspension à un mûrissement dans les mêmes conditions que celles qui ont été données dans la description du troisième procédé.

La récupération et la calcination du précipité se fait de la même manière que celle qui a été décrite plus haut pour le second procédé notamment.

Les compositions de l'invention telles que décrites plus haut ou telles qu'obtenues par les procédés décrits précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs. Ainsi, l'invention concerne aussi des systèmes catalytiques comprenant les compositions de l'invention. Ces systèmes comprennent un revêtement (wash coat) à propriétés catalytiques à base de ces compositions et d'un liant de type connu, sur un substrat du type par exemple monolithe métallique ou en céramique. Ce revêtement est obtenu par mélange de la composition avec le liant de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisables dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, en particulier pour la post combustion automobile et notamment la catalyse trois voies, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme catalyseur de la réduction sélective des NOx par réaction de réduction de ces NOx par tout réducteur du type hydrocarbure ou encore par l'ammoniaque ou l'urée et, dans ce cas, en tant que catalyseur pour la réaction d'hydrolyse ou de décomposition de l'urée en ammoniaque (Procédé SCR).

Dans le cas de ces utilisations en catalyse, les compositions de l'invention peuvent être employées en combinaison avec des métaux précieux ou encore des métaux de transition sous forme oxyde, sulfure ou autre et elles jouent ainsi le rôle de support pour ces métaux. La nature de ces métaux et les techniques d'incorporation de ceux-ci dans les compositions supports sont bien connues de l'homme du métier. Par exemple, les métaux peuvent être l'or, l'argent, le platine, le rhodium, le palladium ou l'iridium, le molybdène, le tungstène, le nickel, le cobalt, le manganèse ou le vanadium; ils peuvent être utilisés seuls ou en combinaison et ils peuvent notamment être incorporés aux compositions par imprégnation.

Pour le traitement des gaz d'échappement les systèmes précités sont montés d'une manière connue dans les pots d'échappement des véhicules automobiles.

Des exemples vont maintenant être donnés.

### EXEMPLE 1

Cet exemple concerne la préparation selon le premier procédé de l'invention d'une composition à base d'oxyde de zirconium dispersé sur un support d'alumine dans les proportions respectives en masse d'oxyde de 30% et 70%.

On procède au préalable à la préparation d'une solution colloïdale de ZrO₂. Pour cela on dilue une solution concentrée de ZrO(NO₃)₂ avec de l'eau permutée pour obtenir 600 ml d'une solution de ZrO(NO₃)₂ à 80 g/L eq. ZrO₂ dont le pH est de 2. On ajoute d'une manière instantanée une solution de NH₃ à 28% de telle sorte que le pH final atteigne 10 et on observe la formation d'un précipité. Le précipité est filtré puis lavé avec 6L d'eau permutée. Le gâteau est remis en suspension dans l'eau permutée (pH=7,5) et acidifié par ajout d'une solution d'acide nitrique HNO₃ à 68% de telle sorte que la concentration soit de 10%poids eq. ZrO₂. Après une nuit sous agitation, on obtient une solution colloïdale limpide à l'oeil dont la taille des particules mesurée par diffusion quasi-élastique de la lumière est de 4nm.

On ajoute sous agitation dans 430 g de cette solution colloïdale de l'acide aminocaproïque de manière à augmenter et stabiliser le pH à 4,5 (acide 6-aminocaproïque 98% Aldrich), puis on ajoute sous agitation 100 g de poudre d'alumine gamma de transition calcinée à 500°C de surface de 320 m²/g, de volume poreux de 0,82 cm³/g et de perte au feu de 5,1%. La suspension ainsi obtenue est maintenue 30 minutes sous agitation puis atomisée à 110°C (température de sortie 110°C, température d'entrée 220°C) avec un débit de 1 L/h. La poudre obtenue est calcinée sous air à 700°C pendant 4 heures.

### EXEMPLE 2

Cet exemple concerne la préparation selon le cinquième procédé de l'invention d'une composition à base d'oxyde de zirconium sur un support alumine dans les proportions respectives en masse d'oxyde de 30% et 70%.

On mélange dans un réacteur sous agitation 44,25 g de poudre d'alumine selon l'exemple 1 dans 420 ml d'eau dans laquelle on a ajouté 14,5 g de HNO₃ concentré pour obtenir un pH de 1,5. On ajoute ensuite 89,45 g de ZrO(NO₃)₂ dilué dans 138,3 ml d'eau. Du NH₄OH à 10% est ensuite introduit afin de parvenir à un pH de 7.

L'ensemble est transféré dans un autoclave et amené sous agitation à 300tr/min à 150°C pendant 4 heures.

Le mélange refroidi est séparé par filtration et lavé 3 fois à isovolume avec de l'eau à température ambiante. Le gâteau est ensuite calciné sous air à 700°C pendant 4 heures.

### EXEMPLE 3

Cet exemple concerne la préparation d'une composition à base d'oxyde de titane sur un support alumine dans les proportions respectives en masse d'oxyde de 30% et 70%.

On procède au préalable à la préparation d'une solution colloïdale de TiO₂. 32 g d'une solution de TiOCl2 (25% poids exprimé en équivalent TiO₂) sont refroidis à 3-4°C puis ajoutés instantanément sous agitation dans 768 g d'eau permutée maintenue à 3-4°C. A l'issue de cet ajout, 1 mL d'une solution de NH₃ à 20% est ajouté ce qui conduit à l'apparition de colloïdes. Le mélange réactionnel est maintenu sous agitation à 3-4°C pendant 10 min. Il est ensuite lavé par dialyse pendant 48 heures à l'eau permutée. La solution colloïdale lavée et récupérée à l'issue de cette dialyse est concentrée par ultrafiltration tangentielle ce qui conduit à une concentration finale de 2,1% en poids en TiO₂. La taille des agrégats, mesurée par diffusion dynamique de la lumière, est de 7nm avec un indice de polydispersité de 0,35.

Un mélange contenant 70% de Al₂O₃ et 30% de TiO₂ est réalisé en mélangeant dans un réacteur sous agitation, 7 g de poudre d'alumine dispersée dans 70 ml d'eau dans lequel a été ajouté 1 g de HNO₃ concentré pour obtenir un pH de 2. L'alumine utilisée est une alumine gamma de transition, stabilisée par du silicium dans une proportion en masse de 90% en alumine et 10% en silice, et de surface spécifique après calcination à 600°C de 278 m²/g. On ajoute ensuite 142,9 g de la solution colloïdale de TiO₂ à 2,1%.

La suspension ainsi obtenue est maintenue 30 minutes sous agitation puis atomisée à 110°C (température de sortie 110°C, température d'entrée 220°C) avec un débit de 1 L/h. La poudre obtenue est calcinée sous air à 700°C pendant 4 heures.

### EXEMPLE 4

Cet exemple concerne la préparation selon le cinquième procédé de l'invention d'une composition à base d'oxyde ZrTiO₄ sur un support alumine dans les proportions respectives en masse d'oxyde de 30% et 70%.

On mélange dans un réacteur sous agitation 44,25 g de poudre d'alumine selon l'exemple 1 dans 500 ml d'eau dans laquelle on a ajouté 11,4 g de HNO₃ concentré pour obtenir un pH de 1. On ajoute ensuite 52 g de ZrOCl₂ et 28,2 g de TiOCl₂ dilué dans 203ml d'eau. Ensuite 95 g de NH₄OH à 10% (10ml/min) sont ajoutés afin de parvenir à un pH de 7.

On procède ensuite à un traitement en autoclave, aux lavages et à la calcination de la même manière que dans l'exemple 2.

L'analyse DRX réalisée sur la composition telle qu'obtenue ainsi que sur cette même composition après calcination 4 heures à 900°C et 4 heures à 1000°C ne fait apparaître que la présence de la phase ZrTiO₄.

Les exemples qui suivent sont des exemples comparatifs mettant en oeuvre la technique connue d'imprégnation.

### EXEMPLE COMPARATIF 5

Cet exemple concerne la préparation d'une composition à base d'oxyde de zirconium sur un support alumine dans les proportions respectives en masse d'oxyde de 30% et 70%.

Cette composition est obtenue par imprégnation à sec de 36,9 g d'alumine selon l'exemple 1 avec une solution aqueuse contenant 74,54 g de ZrO(NO₃)₂.

La poudre est ensuite séchée à 110°C 2 heures dans une étuve ventilée puis calcinée sous air à 700°C pendant 4 heures.

### EXEMPLE COMPARATIF 6

Cet exemple concerne la préparation d'une composition à base d'oxyde de titane sur un support alumine dans les proportions respectives en masse d'oxyde de 30% et 70%.

Cette composition est obtenue par imprégnation à sec de 16,39 g d'alumine selon l'exemple 1 avec 17,09 g de TiOCl2 dilué dans de l'eau.

La poudre est ensuite séchée à 110°C 2 heures dans une étuve ventilée puis calcinée sous air à 700°C pendant 4 heures.

### EXEMPLE COMPARATIF 7

Cet exemple concerne la préparation d'une composition à base d'oxyde de titane et de zirconium sur un support alumine dans les proportions respectives en masse d'oxyde de 30% et 70%.

Cette composition est obtenue par imprégnation à sec de 16,39 g d'alumine selon l'exemple 1 avec une solution aqueuse contenant 12,39 g de ZrOCl₂ et 6,72 g de TiOCl₂.

La poudre est ensuite séchée à 110°C 2 heures dans une étuve ventilée puis calcinée sous air à 700°C pendant 4 heures.

On donne dans le tableau qui suit les caractéristiques des compositions obtenues dans les différents exemples, c'est-à-dire leur surface spécifique BET et la taille des particules de l'oxyde supporté en fonction des différentes températures de calcination.

Les calcinations indiquées dans le tableau ont été conduites sur les compositions déjà calcinées à 700°C.

On notera au préalable que pour les compositions de l'invention des exemples 1 à 4 l'analyse DRX faite sur les compositions directement obtenues à l'issue des procédés décrits dans les exemples, c'est-à-dire après calcination à 700°C ne permet pas de mesurer une taille de particule pour l'oxyde supporté.

Cela signifie que l'on a atteint la limite de mesure liée à la technique DRX et cela implique que la taille des particules est inférieure à environ 2 nm.

**Tableau**

| Exemple | Calcination à 900°C 4h. | | Calcination à 1000°C 4h. | |
|---|---|---|---|---|
| | Surface BET (m²/g) | Taille des particules (nm) | Surface BET (m²/g) | Taille des particules (nm) |
| 1 | 128 | 6,5 | 95 | 16,5 |
| 2 | 133 | 8,5 | 98 | 17 |
| 3 | 129 | 10 | 119 | 23 |
| 4 | 130 | 12 | 97 | 19 |
| Comparatif 5 | 127 | 13 | 86 | 23 |
| Comparatif 6 | 75 | 18 | 9 | 169 |
| Comparatif 7 | 101 | 9 | 47 | 11 |

On voit que les compositions selon l'invention présentent généralement des oxydes supportés dont la taille est nettement plus faible que celles des oxydes des compositions obtenues par la technique connue d'imprégnation.

Dans le cas particulier de l'exemple 4 l'oxyde supporté se présente, après calcination à 900°C et à 1000°C sous la forme d'une phase pure ZrTiO₄ alors que pour l'exemple comparatif 7 cet oxyde se présente sous la forme d'un mélange de phases ZrO₂, TiO₂ et ZrTiO₄. Les valeurs de taille données dans le tableau pour cet exemple 7 correspondent à celles des particules de ZrTiO₄. Les particules de ZrO₂ et de TiO₂ présentent, elles, des tailles plus grandes, du même ordre que celles obtenues pour les autres exemples comparatifs.

La figure annexée est un diagramme de diffraction aux rayons X qui a été obtenu à partir des produits des exemples 4 et 7 après calcination à 900°C.

## Revendications

1. Composition comprenant un oxyde supporté choisi parmi l'oxyde de zirconium, l'oxyde de titane ou un oxyde mixte de zirconium et de titane sur un support à base d'alumine ou d'oxyhydroxyde d'aluminium, **caractérisée en ce que**, après calcination 4 heures à 900°C, l'oxyde supporté est sous forme de particules, déposées sur ledit support, dont la taille est
d'au plus 10 nm lorsque l'oxyde supporté est l'oxyde de zirconium;
d'au plus 15 nm lorsque l'oxyde supporté est l'oxyde de titane ou un oxyde mixte de zirconium et de titane.

2. Composition selon la revendication 1, **caractérisée en ce que** le support est à base d'alumine ou d'oxyhydroxyde d'aluminium stabilisé par au moins un élément stabilisant choisi parmi les terres rares, le baryum, le strontium et le silicium.

3. Composition selon la revendication 1 ou 2, **caractérisée en ce qu'**elle présente une proportion en oxyde supporté d'au plus 50% en masse, plus particulièrement comprise entre 20% et 30%.

4. Composition selon l'une des revendications précédentes, **caractérisée en ce que** l'oxyde supporté est un oxyde de zirconium et d'au moins un autre élément M choisi parmi le praséodyme, le lanthane, le néodyme et l'yttrium.

5. Composition selon l'une des revendications précédentes, **caractérisée en ce que**, après calcination 4 heures à 900°C, la taille des particules de l'oxyde supporté est d'au plus 9 nm lorsque l'oxyde supporté est l'oxyde de zirconium et elle est d'au plus 10 nm lorsque l'oxyde supporté est l'oxyde de titane ou un oxyde mixte de zirconium et de titane.

6. Composition selon l'une des revendications précédentes, **caractérisée en ce que**, après calcination à 1000°C 4 heures, la taille des particules de l'oxyde supporté est d'au plus 20 nm, de préférence d'au plus 17 nm, lorsque l'oxyde supporté est l'oxyde de zirconium et elle est d'au plus 30 nm lorsque l'oxyde supporté est l'oxyde de titane ou un oxyde mixte de zirconium et de titane.

7. Procédé de préparation d'une composition selon l'une des revendications précédentes, **caractérisé en ce qu'**il comprend les étapes suivantes :
- on met en présence une dispersion colloïdale d'un composé du zirconium et/ou du titane et, le cas échéant d'un composé de l'élément M, et un composé de l'aluminium choisi parmi l'alumine, les hydroxydes ou oxyhydroxydes d'aluminium;
- on sèche par atomisation le mélange ainsi formé;
- on calcine le produit séché ainsi obtenu.

8. Procédé de préparation d'une composition selon l'une des revendications 1 à 6, **caractérisé en ce qu'**il comprend les étapes suivantes :
- on forme un mélange liquide comprenant au moins un sel de zirconium ou de titane et, le cas échéant, de l'élément M et un composé de l'aluminium choisi parmi l'alumine, les hydroxydes ou oxyhydroxydes d'aluminium;
- on chauffe le mélange ainsi formé à une température d'au moins 100°C;
- on récupère le précipité ainsi obtenu;
- on calcine ledit précipité.

9. Procédé de préparation d'une composition selon l'une des revendications 2 à 6 dans laquelle le support est à base d'alumine ou d'oxyhydroxyde d'aluminium stabilisé et/ou dopé par un élément stabilisant et/ou dopant choisi parmi les terres rares, le baryum et le strontium, **caractérisé en ce qu'**il comprend les étapes suivantes :
- (a₁) on forme un mélange liquide comprenant une dispersion colloïdale de l'oxyde supporté et, le cas échéant de l'oxyde de l'élément M, un composé de l'aluminium choisi parmi l'alumine, les hydroxydes ou oxyhydroxydes d'aluminium, et un composé de l'élément stabilisant;
- (b₁) on met en présence le mélange précédent avec une base ce par quoi on obtient une suspension comprenant un précipité;
- (c₁) on sèche la suspension ainsi obtenue;
- (d₁) on calcine le produit séché ainsi obtenu.

10. Procédé de préparation d'une composition selon l'une des revendications 2 à 6, dans laquelle le support est à base d'alumine ou d'oxyhydroxyde d'aluminium stabilisé et/ou dopé par un élément stabilisant et/ou dopant choisi parmi les terres rares, le baryum et le strontium, **caractérisé en ce qu'**il comprend les étapes suivantes :
- (a₂) on forme un mélange liquide comprenant une dispersion colloïdale de l'oxyde supporté et, le cas échéant de l'oxyde de l'élément M, et un composé de l'aluminium choisi parmi l'alumine, les hydroxydes ou oxyhydroxydes d'aluminium;
- (b₂) on met en présence le mélange précédent avec une base ce par quoi on obtient une suspension comprenant un précipité;
- (c₂) on ajoute à la suspension ainsi obtenue un composé de l'élément stabilisant;
- (d₂) on sèche la suspension issue de l'étape précédente;
- (e₂) on calcine le produit séché ainsi obtenu.

11. Procédé selon la revendication 9 ou 10, **caractérisé en ce qu'**on soumet à un mûrissement la suspension issue de l'étape (b₁) ou (b₂) avant l'étape (c₁) ou (C₂).

12. Procédé de préparation d'une composition selon l'une des revendications 1 à 6, **caractérisé en ce qu'**il comprend les étapes suivantes :
- on forme un mélange liquide contenant un composé de l'aluminium choisi parmi l'alumine, les hydroxydes ou oxyhydroxydes d'aluminium et au moins un sel de zirconium ou de titane et, le cas échéant, de l'élément M;
- on met en présence une base et le mélange précédent de manière à former un précipité;
- on récupère le précipité ainsi obtenu;
- on calcine ledit précipité.

13. Procédé selon la revendication 12, **caractérisé en ce qu'**on soumet à un mûrissement le précipité obtenu après l'addition de la base.

14. Système catalytique, **caractérisé en ce qu'**il comprend une composition selon l'une des revendications 1 à 6.

## Patentansprüche

1. Zusammensetzung, umfassend ein geträgertes Oxid, das aus Zirconiumoxid, Titanoxid oder einem Mischoxid von Zirconium und Titan auf einem Träger auf Basis von Aluminiumoxid oder Aluminiumoxidhydroxid ausgewählt ist, **dadurch gekennzeichnet, dass** das geträgerte Oxid nach 4 Stunden Calcinierung bei 900°C in Form von auf dem Träger abgeschiedenen Teilchen vorliegt, deren Größe höchstens 10 nm beträgt, wenn es sich bei dem geträgerten Oxid um Zirconiumoxid handelt; höchstens 15 mm beträgt, wenn es sich bei dem geträgerten Oxid um Titanoxid oder einem Mischoxid von Zirconium und Titan handelt.

2. Zusammensetzung nach Anspruch 1, **dadurch gekennzeichnet, dass** der Träger auf Aluminiumoxid oder Aluminiumoxidhydroxid, das durch mindestens ein Stabilisierungselement, das aus Seltenerdmetallen, Barium, Strontium und Silicium ausgewählt ist, stabilisiert ist, basiert.

3. Zusammensetzung nach Anspruch 1 oder 2, **dadurch gekennzeichnet, dass** sie einen Anteil an geträgertem Oxid von höchstens 50 Gew.-%, weiter bevorzugt zwischen 20% und 30%, aufweist.

4. Zusammensetzung nach einem der vorhergehenden Ansprüche, **dadurch gekennzeichnet, dass** es sich bei dem geträgerten Oxid um ein Oxid von Zirconium und mindestens einem anderen Element M, das aus Praseodym, Lanthan, Neodym und Yttrium ausgewählt ist, handelt.

5. Zusammensetzung nach einem der vorhergehenden Ansprüche, **dadurch gekennzeichnet, dass** die Größe der Teilchen des geträgerten Oxids nach 4 Stunden Calcinierung bei 900°C höchstens 9 nm beträgt, wenn es sich bei dem geträgerten Oxid um Zirconiumoxid handelt, und höchstens 10 nm beträgt, wenn es sich bei dem geträgerten Oxid um Titanoxid oder einem Mischoxid von Zirconium und Titan handelt.

6. Zusammensetzung nach einem der vorhergehenden Ansprüche, **dadurch gekennzeichnet, dass** die Größe der Teilchen des geträgerten Oxids nach 4 Stunden Calcinierung bei 1000°C höchstens 20 nm, vorzugsweise höchstens 17 nm, beträgt, wenn es sich bei dem geträgerten Oxid um Zirconiumoxid handelt, und höchstens 30 nm beträgt, wenn es sich bei dem geträgerten Oxid um Titanoxid oder einem Mischoxid von Zirconium und Titan handelt.

7. Verfahren zur Herstellung einer Zusammensetzung nach einem der vorhergehenden Ansprüche, **dadurch gekennzeichnet, dass** es folgende Schritte umfasst:
- man bringt eine kolloidale Dispersion einer Zirconium- und/oder Titanverbindung und gegebenenfalls einer Verbindung des Elements M und eine aus Aluminiumoxid und Aluminiumhydroxiden oder -oxidhydroxiden ausgewählte Aluminiumverbindung in Berührung;
- man sprühtrocknet die so gebildete Mischung;
- man calciniert das so erhaltene getrocknete Produkt.

8. Verfahren zur Herstellung einer Zusammensetzung nach einem der Ansprüche 1 bis 6, **dadurch gekennzeichnet, dass** es folgende Schritte umfasst:
- man bildet eine flüssige Mischung, die mindestens ein Salz von Zirconium oder Titan und gegebenenfalls dem Element M und eine aus Aluminiumoxid und Aluminiumhydroxiden oder -oxidhydroxiden ausgewählte Aluminiumverbindung umfasst;
- man erhitzt die so gebildete Mischung auf eine Temperatur von mindestens 100°C;
- man gewinnt den so erhaltenen Niederschlag;
- man calciniert den Niederschlag.

9. Verfahren zur Herstellung einer Zusammensetzung nach einem der Ansprüche 2 bis 6, wobei der Träger auf Aluminiumoxid oder Aluminiumoxidhydroxid, das durch ein aus Seltenerdmetallen, Barium und Strontium ausgewähltes Stabilisierungs- und/oder Dotierungselement stabilisiert und/oder dotiert ist, basiert, **dadurch gekennzeichnet, dass** es folgende Schritte umfasst:
- (a₁) man bildet eine flüssige Mischung, die eine kolloidale Dispersion des geträgerten Oxids und gegebenenfalls des Oxids des Elements M, eine aus Aluminiumoxid und Aluminiumhydroxiden oder -oxidhydroxiden ausgewählte Aluminiumverbindung und eine Verbindung des Stabilisierungselements umfasst;
- (b₁) man bringt die obige Mischung mit einer Base in Berührung, wodurch man eine einen Niederschlag umfassende Suspension erhält;
- (c₁) man trocknet die so erhaltene Suspension;
- (d₁) man calciniert das so erhaltene getrocknete Produkt.

10. Verfahren zur Herstellung einer Zusammensetzung nach einem der Ansprüche 2 bis 6, wobei der Träger auf Aluminiumoxid oder Aluminiumoxidhydroxid, das durch ein aus Seltenerdmetallen, Barium und Strontium ausgewähltes Stabilisierungs- und/oder Dotierungselement stabilisiert und/oder dotiert ist, basiert, **dadurch gekennzeichnet, dass** es folgende Schritte umfasst:
- (a₂) man bildet eine flüssige Mischung, die eine kolloidale Dispersion des geträgerten Oxids und gegebenenfalls des Oxids des Elements M und eine aus Aluminiumoxid und Aluminiumhydroxiden oder
- oxidhydroxiden ausgewählte Aluminiumverbindung umfasst;
- (b₂) man bringt die obige Mischung mit einer Base in Berührung, wodurch man eine einen Niederschlag umfassende Suspension erhält;
- (c₂) man gibt eine Verbindung des Stabilisierungselements zu der so erhaltenen Suspension;
- (d₂) man trocknet die Suspension aus dem vorhergehenden Schritt;
- (e₂) man calciniert das so erhaltene getrocknete Produkt.

11. Verfahren nach Anspruch 9 oder 10, **dadurch gekennzeichnet, dass** man die Suspension aus Schritt (b₁) bzw. (b₂) vor Schritt (c₁) bzw. (c₂) einer Alterung unterwirft.

12. Verfahren zur Herstellung einer Zusammensetzung nach einem der Ansprüche 1 bis 6, **dadurch gekennzeichnet, dass** es folgende Schritte umfasst:
- man bildet eine flüssige Mischung, die eine aus Aluminiumoxid und Aluminiumhydroxiden oder -oxidhydroxiden ausgewählte Aluminiumverbindung und mindestens ein Salz von Zirconium oder Titan und gegebenenfalls dem Element M enthält;
- man bringt eine Base und die obige Mischung in Berührung, wobei sich ein Niederschlag bildet;
- man gewinnt den so erhaltenen Niederschlag;
- man calciniert den Niederschlag.

13. Verfahren nach Anspruch 12, **dadurch gekennzeichnet, dass** man den nach der Zugabe der Base erhaltenen Niederschlag einer Alterung unterwirft.

14. Katalytisches System, **dadurch gekennzeichnet, dass** es eine Zusammensetzung nach einem der Ansprüche 1 bis 6 umfasst.

## Claims

1. Composition comprising a supported oxide selected from zirconium oxide, titanium oxide and a mixed zirconium titanium oxide on a support based on alumina or on aluminum oxyhydroxide, **characterized in that**, after calcination for 4 hours at 900°C, the supported oxide is in the form of particles deposited on said support, the size of which is at most 10 nm when the supported oxide is zirconium oxide and at most 15 nm when the supported oxide is titanium oxide or a mixed zirconium titanium oxide.

2. Composition according to Claim 1, **characterized in that** the support is based on alumina or on aluminum oxyhydroxide stabilized by at least one stabilizing element selected from rare earths, barium, strontium and silicon.

3. Composition according to Claim 1 or 2, **characterized in that** it has a supported oxide content of at most 50% by weight, more particularly of between 20% and 30%.

4. Composition according to one of the preceding claims, **characterized in that** the supported oxide is a zirconium oxide and an oxide of at least one other element M selected from praseodymium, lanthanum, neodymium and yttrium.

5. Composition according to one of the preceding claims, **characterized in that**, after calcination for 4 hours at 900°C, the size of the supported oxide particles is at most 9 nm when the supported oxide is zirconium oxide and it is at most 10 nm when the supported oxide is titanium oxide or a mixed zirconium titanium oxide.

6. Composition according to one of the preceding claims, **characterized in that**, after calcination at 1000°C for 4 hours, the size of the supported oxide particles is at most 20 nm, preferably at most 17 nm, when the supported oxide is zirconium oxide and it is at most 30 nm when the supported oxide is titanium oxide or a mixed zirconium titanium oxide.

7. Method of preparing a composition as claimed in one of the preceding claims, **characterized in that** it comprises the following steps:
- an aluminum compound, selected from alumina and aluminum hydroxides or oxyhydroxides, is brought into contact with a colloidal dispersion of a zirconium and/or titanium compound and, where appropriate, of a compound of the element M;
- the mixture thus formed is spray-dried; and
- the dried product thus obtained is calcined.

8. Method of preparing a composition according toone of Claims 1 to 6, **characterized in that** it comprises the following steps:
- a liquid mixture comprising at least one zirconium or titanium salt and, where appropriate, a salt of the element M and an aluminum compound selected from alumina and aluminum hydroxides or oxyhydroxides is formed;
- the mixture thus formed is heated to a temperature of at least 100°C;
- the precipitate thus obtained is recovered; and
- said precipitate is calcined.

9. Method of preparing a composition according toone of Claims 2 to 6, in which the support is based on alumina or on aluminum oxyhydroxide stabilized by and/or doped with a stabilizing and/or doping element selected from rare earths, barium and strontium, **characterized in that** it comprises the following steps:
- (a₁) a liquid mixture is formed that comprises a colloidal dispersion of the supported oxide and, where appropriate, of the oxide of the element M, an aluminum compound, selected from alumina and aluminum hydroxides or oxyhydroxides, and a compound of the stabilizing element;
- (b₁) the above mixture is brought into contact with a base, whereby a suspension comprising a precipitate is obtained;
- (c₁) the suspension thus obtained is dried; and
- (d₁) the dried product thus obtained is calcined.

10. Method of preparing a composition according toone of Claims 2 to 6, in which the support is based on alumina or on aluminum oxyhydroxide stabilized by and/or doped with a stabilizing and/or doping element selected from rare earths, barium and strontium, **characterized in that** it comprises the following steps:
- (a₂) a liquid mixture is formed that comprises a colloidal dispersion of the supported oxide and, where appropriate, of the oxide of the element M, and an aluminum compound selected from alumina and aluminum hydroxides or oxyhydroxides;
- (b₂) the above mixture is brought into contact with a base, whereby a suspension comprising a precipitate is obtained;
- (c₂) a compound of the stabilizing element is added to the suspension thus obtained;
- (d₂) the suspension resulting from the previous step is dried; and
- (e₂) the dried product thus obtained is calcined.

11. Method according to Claim 9 or 10, **characterized in that** the suspension resulting from step (b₁) or (b₂) undergoes a maturation operation before step (c₁) or (c₂).

12. Method of preparing a composition according toone of Claims 1 to 6, **characterized in that** it comprises the following steps:
- a liquid mixture is formed that contains an aluminum compound selected from alumina and aluminum hydroxides or oxyhydroxides, and at least one zirconium or titanium salt and, where appropriate, a salt of the element M;
- a base is brought into contact with the above mixture so as to form a precipitate;
- the precipitate thus obtained is recovered; and
- said precipitate is calcined.

13. Method according to Claim 12, **characterized in that** the precipitate obtained after the addition of the base undergoes a maturation operation.

14. Catalytic system, **characterized in that** it comprises a composition according to one of Claims 1 to 6.
